# EUROPEAN PATENT SPECIFICATION

(11) **EP 3 846 572 B1**
(45) Date of publication and mention of the grant of the patent: **10.12.2025**
(21) Application number: 18932079.9
(22) Date of filing: 31.08.2018
(51) Int. Cl.: H04W 74/08, H04W 56/00, H04W 74/0833

(54) **RANDOM ACCESS METHOD, DATA RECEIVING METHOD AND DEVICE THEREOF, AND COMMUNICATION SYSTEM**
DIREKTZUGRIFFSVERFAHREN, DATENEMPFANGSVERFAHREN UND -VORRICHTUNG DAFÜR UND KOMMUNIKATIONSSYSTEM
PROCÉDÉ D'ACCÈS ALÉATOIRE, PROCÉDÉ DE RÉCEPTION DE DONNÉES ET DISPOSITIF ASSOCIÉ, ET SYSTÈME DE COMMUNICATION

(43) Date of publication of application: 07.07.2021
(73) Proprietor: FUJITSU LIMITED, Kanagawa 211-8588 (JP)
(72) Inventor: CHEN, Zhe, Beijing 100027 (CN); SONG, Lei, Beijing 100027 (CN); JIA, Meiyi, Beijing 100027 (CN); ZHANG, Lei, Beijing 100027 (CN); WANG, Xin, Beijing 100027 (CN)
(74) Representative: Haseltine Lake Kempner LLP
(86) International application number: PCT/CN2018/103610
(87) International publication number: WO 2020/042160

(56) References cited:
- WO-A1-2013/125890
- WO-A1-2017/183312
- CN-A- 102 761 954
- CN-A- 104 838 717
- CN-A- 106 341 899
- CN-A- 108 282 899
- SAMSUNG: "MAC Impacts: Beam Failure Recovery for SCell", vol. RAN WG2, no. Sanya, China; 20180416 - 20180420, 14 April 2018 (2018-04-14), XP051428053, Retrieved from the Internet <URL:http://www.3gpp.org/ftp/Meetings%5F3GPP%5FSYNC/RAN2/Docs/> [retrieved on 20180414]
- HUAWEI ET AL: "Discussion on beam failure recovery for SCell", vol. RAN WG2, no. Busan, Korea; 20180521 - 20180525, 11 May 2018 (2018-05-11), XP051465044, Retrieved from the Internet <URL:http://www.3gpp.org/ftp/tsg%5Fran/WG2%5FRL2/TSGR2%5F102/Docs> [retrieved on 20180511]

## Description

### Technical Field

This disclosure relates to the field of communication technologies, and in particular to a random access method and data reception method, apparatuses thereof and communication system.

### Background

Random access procedures are important procedures for realizing initial access and uplink synchronization of a terminal equipment. The random access procedures include a contention-based random access procedure and a non-contention-based random access procedure. When a random access procedure is a non-contention-based random access procedure, success of a random access procedure refers to successful reception of a random access response message (Msg.2), and failure of a random access procedure refers to that when transmission of a random access preamble related to Msg.2 reaches a maximum time or a related random access procedure exceeds a predetermined time, a user has not successfully received Msg.2; and when a random access procedure is a contention-based random access procedure, success of a random access procedure refers successful reception of a contention resolution message (Msg.4), and failure of a random access procedure refers to that when transmission of a random access preamble related to Msg.4 reaches a maximum time or a related random access procedure exceeds a predetermined time, a user has not successfully received Msg.4.

WO 2017/183312 A1 relates to a terminal device, which can efficiently perform a random access procedure using multiple serving cells including a primary cell and one or multiple secondary cells to communicate with a base station device. The terminal device is provided with: a medium access control layer processing unit which, on the basis of a PDCCH order, initiates the random access procedure in any of the multiple serving cells; a transmission unit, which transmits a random access preamble in any of the serving cells; and a receiving unit which receives a random access response, wherein, in the case that reception of the random access response is considered to have ended in failure, the medium access control layer processing unit determines whether or not to automatically reinitiate transmission of the random access preamble at least on the basis of whether the random access preamble was transmitted by the primary cell or a secondary cell.

WO 2013/125890 A1 relates to a device and method for effecting a random access procedure in a multiple component carrier system. The method comprises the steps of: receiving, from a base station, a physical downlink control channel order ordering the start of a random access procedure in a secondary serving cell comprised in a terminal; transmitting, to the base station, a random access preamble as a response to the physical downlink control channel order; receiving, from the base station, a PDSCH comprising a random access response message as a response to the random access preamble; and deciding whether the random access procedure has been successful. 3GPP contribution R2-1804303 teaches MAC layer to support Beam Failure Recovery (BFR) on a Secondary Cell (SCell) in addition to the SpCell. The changes include separate timers and counters for each serving cell, initiating Random Access on the SCell, and using only contention-free random access resources for BFR on the SCell.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

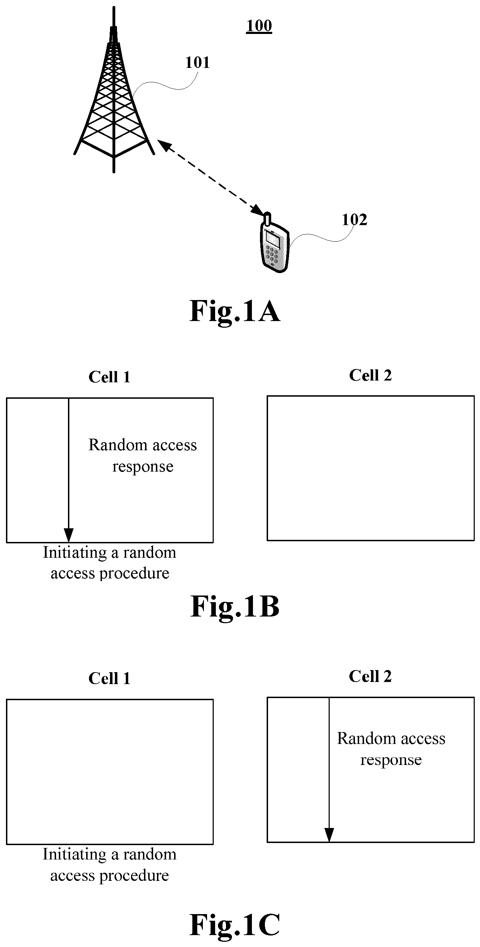

It was found by the inventors that the first above method for determining the success of a random access procedure is only addressed to a single-carrier scenario. However, when a network device configures multiple carriers for a terminal equipment, a cell where the random access procedure is initiated and a cell where a random access response is received may be identical or different. FIGs. 1B-1C are schematic diagrams of identical and different scenarios respectively. As shown in FIG. 1B, after initiating a random access procedure in cell 1, a random access response is still received in cell 1; and as shown in FIG. 1C, after initiating the random access procedure in cell 1, the random access response may possibly be received in cell 2.

At present, there is no perfect method for determining whether a random access procedure is successful in a multi-carrier scenario in the related art.

In order to solve the above problem, embodiments of this disclosure provide a random access method and data reception method, apparatuses thereof and communication system.

The present invention is defined by the independent claim, to which reference should now be made. Specific embodiments are defined in the dependent claims.

An advantage of the embodiments of this disclosure exists in that whether a random access procedure is successful is determined according to a relationship between the received downlink control channel and a cell or a random access preamble transmitted by the terminal equipment. Hence, the problems existed in the related art may be solved, and the terminal equipment may be able to accurately receive and transmit data, thereby improving a rate of success, reducing times of retransmission, and saving energy consumption.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort.

In the drawings:
FIG. 1A is a schematic diagram of a communication system of an embodiment of this disclosure;
FIGs. 1B-1C are schematic diagrams of scenarios of this embodiment;
FIG. 2 is a flowchart of a random access method of Embodiment 1;
FIG. 3 is a flowchart of a random access method of Embodiment 2;
FIG. 4 is a flowchart of a random access method of Embodiment 3;
FIG. 5 is a flowchart of a random access method of Embodiment 4;
FIG. 6 is a flowchart of a data reception method of Embodiment 5;
FIG. 7 is a flowchart of a data transmission method of Embodiment 6;
FIG. 8 is a schematic diagram of a structure of a random access apparatus of Embodiment 7;
FIG. 9 is a schematic diagram of a structure of a random access apparatus of Embodiment 8;
FIG. 10 is a schematic diagram of a structure of a data reception apparatus of Embodiment 9;
FIG. 11 is a schematic diagram of a structure of a data transmission apparatus of Embodiment 10;
FIG. 12 is a schematic diagram of a structure of a network device of Embodiment 11;
FIG. 13 is a schematic diagram of a structure of a terminal equipment of Embodiment 11; and
FIG. 14 is a flowchart of a data reception and transmission method of Embodiment 11.

### Detailed Description

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the appended claims. Various embodiments of this disclosure shall be described below with reference to the accompanying drawings. These embodiments are illustrative only, and are not intended to limit this disclosure.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, "multiple" or "a plurality of" refers to at least two.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to an equipment in a communication system that accesses a terminal equipment to the communication network and provides services for the terminal equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC), etc.

For example, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, which may be expressed as a serving cell, and may be a macro cell or a pico cell, depending on a context of the term.

In the embodiments of this disclosure, the term "user equipment (UE)" or "terminal equipment (TE)" refers to, for example, equipment accessing to a communication network and receiving network services via a network device. The user equipment may be fixed or mobile, and may also be referred to as a mobile station (MS), a terminal, a subscriber station (SS), an access terminal (AT), or a station, etc.

For example, the terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Scenarios in the embodiments of this disclosure shall be described below by way of examples; however, this disclosure is not limited thereto.

FIG. 1A is a schematic diagram of a communication system of an embodiment of this disclosure, in which a case where a user equipment and a network device are taken as examples is schematically shown. As shown in FIG. 1A, a communication system 100 may include a network device 101 and a terminal equipment 102. For the sake of simplicity, description is given in FIG. 1A by taking one terminal equipment and one network as examples; however, the embodiment of this disclosure is not limited thereto.

In the embodiment of this disclosure, existing traffics or traffics that may be implemented in the future may be performed between the network device 101 and the terminal equipment 102. For example, such traffics may include but not limited to enhanced mobile broadband (eMBB), massive machine type communication (MTC), and ultra-reliable and low-latency communication (URLLC), etc.

In future high-frequency communication scenarios, communication links are susceptible to physical conditions, such as weather, obstacles, changes in direction and angles, and other factors, resulting in transmission failures in the original beam directions. The beam failure recovery technique is mainly address to such scenarios, which uses results of measurement of power beams in different directions to quickly position a new and reliable beam direction, thereby completing rapid recovery of the link. The beam failure recovery technique is not only very effective in single-carrier communication scenarios, but also may play an important role in multi-carrier scenarios. A beam failure recovery procedure may be implemented based on a random access procedure. For example, for a random access procedure for beam failure recovery, a terminal equipment transmits a beam failure recovery request via a physical random access channel, the beam failure recovery request being a corresponding random access preamble, which notifies a network device that a beam failure occurs and notifies the network device of its previously maintained backup beam number, and switches a beam of the terminal equipment to the backup beam. After receiving the beam failure recovery request, the network device switch its own beam to the backup beam notified by the terminal equipment, and transmits a beam failure recovery response on this beam. The beam failure recovery response is a corresponding random access response (RAR), and when the terminal equipment determines that some conditions are met, it determines that the beam failure recovery procedure is successful. And implementations of the above conditions shall be described in the embodiment of this disclosure.

It should be noted that the embodiment of this disclosure shall be described by taking a random access procedure corresponding to a beam failure recovery procedure as an example. However, this disclosure is not limited thereto, and is also applicable to other scenarios where random access procedures are applied.

The embodiments of this disclosure shall be described below with reference to the accompanying drawings.

### Embodiment 1

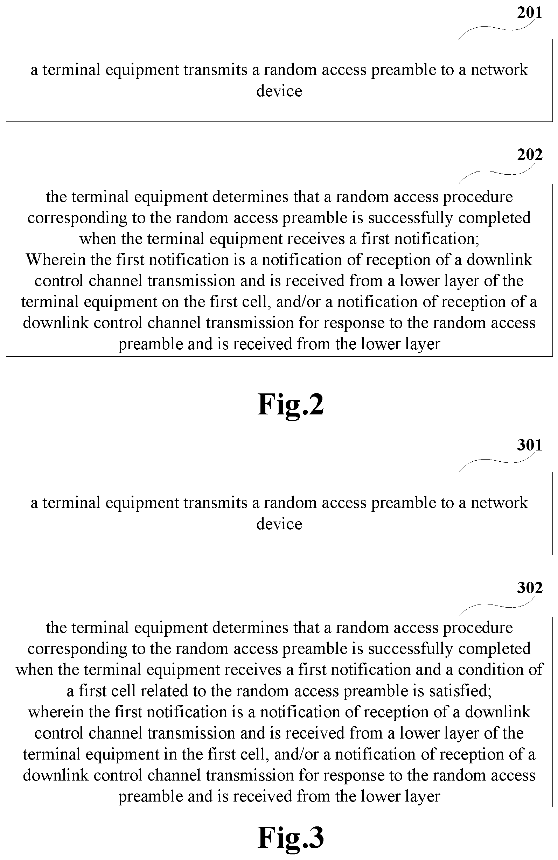

FIG. 2 is a flowchart of a random access method of Embodiment 1, which is applicable to a terminal equipment side. As shown in FIG. 2, the method includes:
step 201: a terminal equipment transmits a random access preamble to a network device; and
step 202: the terminal equipment determines that a random access procedure corresponding to the random access preamble is successfully completed when the terminal equipment receives a first notification;
wherein the first notification is a notification of reception of a downlink control channel transmission and is received from a lower layer of the terminal equipment on the first cell, and/or a notification of reception of a downlink control channel transmission for response to the random access preamble and is received from the lower layer.

In this embodiment, in step 201, the terminal equipment may initiate a random access procedure in the first cell. For example, the terminal equipment transmits a random access preamble to the network device in the first cell. In one implementation, the terminal equipment may select a random access preamble in a random access preamble set, and use a resource in the random access resource set to transmit the random access preamble; in one implementation, the network device may allocate a dedicated random access preamble, and/or a random access resource (such as a random access channel (RACH) resource), and/or a random access preamble format, for the terminal equipment, and the terminal equipment transmits the random access preamble according to allocation of the network side; a part of the random access preamble is mapped onto a physical layer on a physical random access channel (PRACH). After the terminal equipment transmits the random access preamble, the terminal equipment ignores possible occurrence of a measurement gap.

In step 201, the random access procedure may be a random access procedure for a beam failure recovery procedure, and the random access preamble may be a beam failure recovery request, which is used to notify the network device that a beam failure occurs. A media access control (MAC) entity of the terminal equipment may transmit a non-contention-based random access preamble corresponding to the beam failure recovery request. However, this embodiment is not limited thereto, the random access procedure may also be initiated in other scenarios (such as handover, and reestablishment), and the random access preamble is not limited to corresponding to a beam failure recovery request.

In this embodiment, after receiving the random access preamble of the terminal equipment, the network device will feed back a random access response to the terminal equipment, such as carrying the random access response by a physical downlink control channel (PDCCH). The terminal equipment monitors the PDCCH transmission or monitors PDCCH transmission related to the random access preamble to determine whether control information transmitted by the network device is successfully received, and determine whether the random access procedure is successful. However, in a multi-carrier scenario, the network device will configure multiple carriers for the terminal equipment, and a serving cell (a corresponding carrier) of the terminal equipment may be changed. That is, a current serving cell (a second cell) may be different from or identical to the serving cell (a first cell) in step 201. The second cell is a cell for monitoring downlink control channel transmission for response to the random access preamble, or a special cell (SpCell). The special cell may include at least one of the following: a primary cell (PCell) of a master cell group (MCG) in case of dual connectivity, a primary cell (PSCell) of a secondary cell group (SCG) in a case of dual connectivity, a primary cell in a case of non-dual connectivity; but this disclosure is not limited thereto. Therefore, even if the PDCCH transmission is received, it cannot be directly determined that the PDCCH transmission is a random access response to the random access preamble transmitted in step 201, and thus, it is impossible to determine whether the random access procedure is successful (completed).

Therefore, in this embodiment, before step 202, the method may further include (not shown in the figures): a lower layer of the terminal equipment receives the downlink control channel transmission.

In this embodiment, the lower layer of the terminal equipment is defined relative to a higher layer of the terminal equipment. The lower layer of the terminal equipment may be a physical layer of the terminal equipment, and the higher layer of the terminal equipment may be an MAC layer or a radio resource control (RRC) layer, and reference may be made to definitions in the related art for specific meanings thereof, which are not limited in this embodiment.

In one implementation, the downlink control channel transmission is downlink control channel transmission of the first cell, and the first cell is a cell for initiation of a random access procedure corresponding to the random access preamble, or a cell where the random access preamble is transmitted. The lower layer of the terminal equipment transmits the first notification of reception of the downlink control channel transmission to the MAC entity of the terminal equipment. **In** step 202, when the MAC entity of the terminal equipment receives the first notification, it determines (or considers) that the random access procedure corresponding to the random access preamble is successfully completed. As it is determined that the downlink control channel transmission is the downlink control channel transmission of the first cell and the first cell is a cell for initiation of a random access procedure corresponding to the random access preamble or a cell where the random access preamble is transmitted, the terminal equipment may infer that the downlink control channel of the first cell may communicate normally, and may determine that the random access procedure corresponding to the random access preamble in step 201 is successfully completed.

**In** one implementation, the downlink control channel transmission is the downlink control channel transmission for response to the random access preamble in step 201, and the lower layer of the terminal equipment transmits the first notification of reception of the downlink control channel transmission to the MAC entity of the terminal equipment. For example, the downlink control channel transmission is downlink control channel transmission for response to the beam failure recovery request. **In** step 202, when the MAC entity of the terminal equipment receives the first notification, it determines (or considers) that the random access procedure corresponding to the random access preamble (such as the beam failure recovery request) is successfully completed. As it is determined that the downlink control channel transmission is downlink control channel transmission for response to the random access preamble, it is determined that the downlink control channel transmission is a response to the random access preamble in step 201, and hence, it may be determined that the random access procedure to which the random access preamble in step 201 corresponds is successfully completed.

**In** this embodiment, the above two implementations may be executed separately or may be executed in a combined manner. For example, the downlink control channel transmission is downlink control channel transmission of the first cell for response to the random access preamble in step 201, and this embodiment is not limited thereto.

**In** this embodiment, the downlink control channel transmission is addressed to a cell radio network temporary identifier (C-RNTI) or a random access radio network temporary identifier (RA-RNTI). For example, the downlink control channel is scrambled by an RNTI or an RA-RNTI, and reference may be made to existing techniques for a specific scrambling method, which shall not be described herein any further.

In this embodiment, after step 202, as the random access procedure is successfully completed, the method further includes (not shown in the figures): the terminal equipment stops transmitting or receiving uplink/downlink signals related to the random access procedure. For example, the terminal equipment stops transmitting the random access preamble corresponding to the random access procedure, and/or the terminal equipment stops receiving the random access response corresponding to the random access procedure, and/or the terminal equipment stops transmitting uplink transmission indicated by the random access response to which the random access procedure corresponds, etc. However, this embodiment is not limited thereto.

With the above embodiment, whether a random access procedure is successful is determined according to a relationship between the downlink control channel transmission and a cell or a random access preamble transmitted by the terminal equipment. Hence, the terminal equipment may be able to accurately receive and transmit data, thereby improving a rate of success, reducing times of retransmission, and saving energy consumption.

### Embodiment 2

FIG. 3 is a flowchart of a random access method of Embodiment 2, which is applicable to a terminal equipment side. As shown in FIG. 3, the method includes:
step 301: a terminal equipment transmits a random access preamble to a network device; and
step 302: the terminal equipment determines that a random access procedure corresponding to the random access preamble is successfully completed when the terminal equipment receives a first notification and a condition of a first cell related to the random access preamble is satisfied;
wherein the first notification is a notification of reception of a downlink control channel transmission and is received from a lower layer of the terminal equipment in the first cell, and/or a notification of reception of a downlink control channel transmission for response to the random access preamble and is received from the lower layer.

In this embodiment, reference may be made to step 201 in Embodiment 1 for implementation of step 301, which shall not be described herein any further.

In this embodiment, before step 302, the method may further include (not shown in the figures): the lower layer of the terminal equipment receives the downlink control channel transmission, and transmits first notification of reception of the downlink control channel transmission to the MAC entity of the terminal equipment. Reference may be made to Embodiment 1 for specific implementation of the downlink control channel transmission, which shall not be described herein any further.

In this embodiment, what is different from Embodiment 1 is that in Embodiment 1, the terminal equipment determines that the random access procedure corresponding to the random access preamble is successfully completed when receiving the first notification, while in this embodiment, in addition to receiving the first notification, the terminal equipment needs also to determine whether the condition of the first cell related to the random access preamble is satisfied, and when the first notification is received and the condition is satisfied, the terminal equipment determines that the random access procedure corresponding to the random access preamble is successfully completed.

In this embodiment, the condition of the first cell related to the random access preamble is that the first cell is identical to a second cell, or the first cell is different from a second cell. Reference may be to Embodiment 1 of specific meanings of the first cell and second cell, which shall not be described herein any further.

In one implementation, the downlink control channel transmission is downlink control channel transmission of the first cell, and the lower layer of the terminal equipment transmits the first notification of reception of the downlink control channel transmission to the MAC entity of the terminal equipment. In step 302, when the MAC entity of the terminal equipment receives the first notification and the first cell and the second cell are identical, it determines (or considers) that the random access procedure corresponding to the random access preamble is successfully completed. As the first cell and the second cell are identical, it is determined that the downlink control channel transmission is the downlink control channel transmission of the first cell and/or the second cell, and the terminal equipment may infer that the downlink control channel of the first cell and/or the second cell may communicate normally, and hence determines that the random access procedure corresponding to the random access preamble in step 301 is successfully completed.

**In** one implementation, the downlink control channel transmission is downlink control channel transmission for response to the random access preamble in step 301; and the lower layer of the terminal equipment transmits the first notification of reception of the downlink control channel transmission to the MAC entity of the terminal equipment, for example, the downlink control channel transmission is downlink control channel transmission for response to the beam failure recovery request; in step 302, when the MAC entity of the terminal equipment receives the first notification and the first cell and the second cell are identical, it determines (or considers) that the random access process corresponding to the random access preamble (for example, a beam failure recovery request) is successfully completed. As it is determined that the downlink control channel transmission is downlink control channel transmission for response to the random access preamble, it is determined that the downlink control channel transmission is a response addressed to the random access preamble in step 301 (a beam failure recovery request response), and hence, it may be determined that the random access procedure corresponding to the random access preamble in step 301 is successfully completed.

**In** this embodiment, the above two implementations may be executed separately or may be executed in a combined manner. For example, the downlink control channel transmission is downlink control channel transmission of the first cell for response to the random access preamble in step 301, and this embodiment is not limited thereto.

**In** one implementation, the downlink control channel transmission is downlink control channel transmission of the first cell. The lower layer of the terminal equipment transmits the first notification of reception of the downlink control channel transmission to the MAC entity of the terminal equipment. **In** step 302, when the MAC entity of the terminal equipment receives the first notification and the first cell and the second cell are different, it determines (or considers) that the random access procedure corresponding to the random access preamble is successfully completed. As the first cell and the second cell are different, it is determined that the downlink control channel transmission is the downlink control channel transmission of the first cell, but not the downlink control channel transmission of the second cell, and the first cell is a cell for initiation of a random access procedure corresponding to the random access preamble, or a cell where the random access preamble is transmitted, hence, the terminal equipment may infer that the downlink control channel of the first cell may have been able to communicate normally, hence, it may determine that the random access procedure corresponding to the random access preamble in step 301 is successfully completed.

**In** one implementation, the downlink control channel transmission is downlink control channel transmission for response to the random access preamble in step 301. The lower layer of the terminal equipment transmits the first notification of reception of the downlink control channel transmission to the MAC entity of the terminal equipment. For example, the downlink control channel transmission is downlink control channel transmission for response to a beam failure recovery request. **In** step 302, when the MAC entity of the terminal equipment receives the first notification and the first cell and the second cell are different, it determines (or considers) that the random access procedure corresponding to the random access preamble (such as a beam failure recovery request) is successfully completed. As it is determined that the downlink control channel transmission is downlink control channel transmission for response to the random access preamble (transmitted in the first cell), it may determine that the downlink control channel transmission is a response to the random access preamble in step 301 (a beam failure recovery request response), and hence, it may determine that the random access procedure corresponding to the random access preamble in step 301 is successfully completed.

In this embodiment, the above two implementations may be executed separately or may be executed in a combined manner. For example, the downlink control channel transmission is downlink control channel transmission of the first cell for response to the random access preamble in step 301, and this embodiment is not limited thereto.

In this embodiment, the downlink control channel transmission is addressed to a cell radio network temporary identifier (C-RNTI) or a random access radio network temporary identifier (RA-RNTI). Reference may be made to Embodiment 1 for specific implementations thereof, which shall not be described herein any further.

In this embodiment, after step 302, as the random access procedure is successfully completed, the method further includes (not shown in the figures): the terminal equipment stops transmitting or receiving uplink/downlink signals related to the random access procedure. Reference may be made to Embodiment 1 for a specific implementation thereof, which shall not be described herein any further.

In this embodiment, the scenario of the random access procedure may further be determined according to the condition, i.e. the scenario where the cell for initiation of a random access procedure corresponding to the random access preamble (or the cell where the random access preamble is transmitted) is identical to or different from the cell for monitoring downlink control channel transmission for response to the random access preamble (or a special cell), and whether a random access procedure is successful is determined according to a relationship between the downlink control channel transmission and a cell or a random access preamble transmitted by the terminal equipment. Hence, the terminal equipment may be able to accurately receive and transmit data, thereby improving a rate of success, reducing times of retransmission, and saving energy consumption.

### Embodiment 3

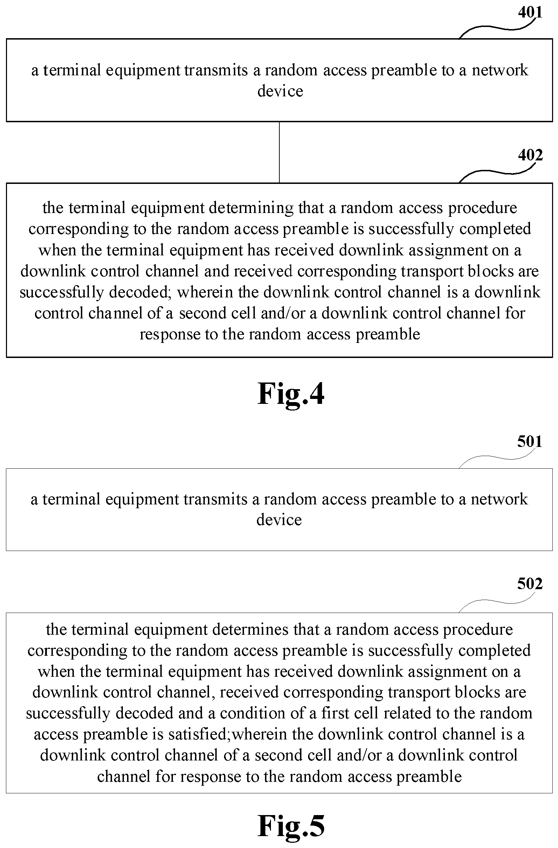

FIG. 4 is a flowchart of a random access method of Embodiment 3, which is applicable to a terminal equipment side. As shown in FIG. 4, the method includes:
step 401: a terminal equipment transmits a random access preamble to a network device; and
step 402: the terminal equipment determining that a random access procedure corresponding to the random access preamble is successfully completed when the terminal equipment has received downlink assignment on a downlink control channel and received corresponding transport blocks are successfully decoded;
wherein the downlink control channel is a downlink control channel of a second cell and/or a downlink control channel for response to the random access preamble.

In this embodiment, reference may be made to step 201 in Embodiment 1 for an implementation of step 401, which shall not be described herein any further.

In this embodiment, what is different from Embodiment 1 is that in Embodiment 1, the terminal equipment determines that the random access procedure corresponding to the random access preamble is successfully completed when receiving the first notification, while in this embodiment, as a data channel may carry information indicating subsequent uplink and downlink transmission, or transmission of a data channel may be used to detect channel quality, and subsequent reception and transmission may only be performed when data has successfully received (decoded) on data channel transmission according to information indicated thereby. Hence, whether the random access procedure corresponding to the random access preamble is successfully completed is determined according to not only reception of a PDCCH, but also reception of a downlink data channel (a PDSCH) scheduled on the PDCCH.

In this embodiment, after receiving the random access preamble of the terminal equipment, the network device will feed back a random access response to the terminal equipment. For example, the response is carried by downlink assignment received in a physical downlink control channel (PDCCH), and the terminal equipment monitors the downlink assignment or monitors downlink assignment associated with the random access preamble so as to determine whether control information transmitted by the network device may be successfully received, and determine whether the random access procedure is successful. In a multi-carrier scenario, the network device will configure multiple carriers for the terminal equipment, and a serving cell (a corresponding carrier) of the terminal equipment may be changed, that is, a current serving cell (a second cell) may be different from or identical to the serving cell (the first cell) in step 401, and the second cell is a cell for monitoring downlink assignment for response to the random access preamble, or is a special cell (SpCell). Therefore, even if the downlink assignment is received on the PDCCH, it cannot be directly determined that the downlink assignment is a random access response addressed to the random access preamble transmitted in step 401, and thus it cannot be determined whether the random access procedure is successful (completed).

Therefore, in this embodiment, before step 402, the method may further include (not shown in the figures): the terminal equipment monitors the downlink assignment on the downlink control channel, and when the downlink assignment is received on the PDCCH, receiving transport blocks on the PDSCH scheduled by the PDCCH (transport blocks are taken as basic transmission units of the data on the PDSCH), and decoding the received transport block.

In this embodiment, the downlink assignment refers to downlink control information (DCI) including downlink data scheduling. For example, the lower layer (such as a physical layer) of the terminal equipment receives DCI containing an indication of a PDSCH, the terminal equipment receives the PDSCH on a corresponding resource according to indication information in the DCI, and cyclic redundancy check (CRC) will be performed on the received PDSCH according to a predetermined rule. When the check is successful, the terminal equipment considers that decoding of the transport blocks is successful.

In one implementation, the downlink control channel is a downlink control channel of the second cell, and the second cell is a cell for monitoring downlink assignment for response to the random access preamble, or is a special cell (SpCell). In step 402, when the MAC entity of the terminal equipment receives the downlink assignment on the downlink control channel and the received corresponding transport blocks are successfully decoded, it determines (or considers) that the random access procedure corresponding to the random access preamble is successfully completed. As the downlink assignment of the second cell and the corresponding transport blocks are successfully received, it may be inferred that the network device and the terminal equipment may communicate normally, there is no need to continue with the random access procedure, and hence, it may be determined that the random access procedure corresponding to the random access preamble in step 401 is successfully completed.

In this embodiment, optionally, the transport blocks may be transport blocks received on the first cell; however, this embodiment is not limited thereto.

In one implementation, the downlink control channel is downlink control channel for response to the random access preamble in step 401. For example, the downlink control channel is downlink control channel for response to a beam failure recovery request. In step 402, when the MAC entity of the terminal equipment receives the downlink assignment on the downlink control channel and the received corresponding transport blocks are successfully decoded, it determines (or considers) that the random access procedure corresponding to the random access preamble (such as a beam failure recovery request) is successfully completed. As the downlink assignment for response to the random access preamble and the corresponding transport blocks are successfully received, it may be inferred that the network device and the terminal equipment may communicate normally, there is no need to continue with the random access procedure, and hence, it may be determined that the random access procedure corresponding to the random access preamble in step 401 is successfully completed.

In this embodiment, optionally, the transport blocks may be transport blocks received on the first cell; however, this embodiment is not limited thereto.

In this embodiment, the above two implementations may be executed separately or may be executed in a combined manner. For example, the downlink control channel is downlink control channel of the second cell for response to the random access preamble in step 401, and this embodiment is not limited thereto.

In this embodiment, the downlink control channel is for a cell radio network temporary identifier (C-RNTI) or a random access radio network temporary identifier (RA-RNTI). Reference may be made to Embodiment 1 for a specific implementation, which shall not be described herein any further.

In this embodiment, after step 402, as the random access procedure is successfully completed, the method further includes (not shown in the figures): the terminal equipment stops transmitting or receiving uplink/downlink signals related to the random access procedure. Reference may be made to Embodiment 1 for a specific implementation thereof, which shall not be described herein any further.

With the above embodiment, whether a random access procedure is successful is determined according to a relationship between the downlink control channel and a cell or a random access preamble transmitted by the terminal equipment. Hence, the terminal equipment may be able to accurately receive and transmit data, thereby improving a rate of success, reducing times of retransmission, and saving energy consumption.

### Embodiment 4

FIG. 5 is a flowchart of a random access method of Embodiment 4, which is applicable to a terminal equipment side. As shown in FIG. 5, the method includes:
step 501: a terminal equipment transmits a random access preamble to a network device; and
step 502: the terminal equipment determines that a random access procedure corresponding to the random access preamble is successfully completed when the terminal equipment has received downlink assignment on a downlink control channel, received corresponding transport blocks are successfully decoded and a condition of a first cell related to the random access preamble is satisfied;
wherein the downlink control channel is a downlink control channel of a second cell and/or a downlink control channel for response to the random access preamble.

In this embodiment, reference may be made to step 201 in Embodiment 1 for an implementation of step 501, which shall not be described herein any further.

Hence, in this embodiment, before step 502, the method may further include (not shown in the figures): the terminal equipment monitors the downlink assignment on the downlink control channel, and when the downlink assignment is received on the PDCCH, receives transport blocks on the PDSCH scheduled by the PDCCH (transport blocks are taken as basic transmission units of the data on the PDSCH), and decodes the received transport block. Reference may be made to Embodiment 3 for a specific implementation of the downlink control channel, which shall not be described herein any further.

In this embodiment, what is different from Embodiment 3 is that in Embodiment 3, the terminal equipment determines that the random access procedure corresponding to the random access preamble is successfully completed after the downlink assignment is received and the received corresponding transport blocks are successfully decoded, while in this embodiment, in addition to receiving the downlink assignment and the received corresponding transport blocks are successfully decoded, the terminal equipment needs also to determine whether the condition of the first cell related to the random access preamble is satisfied, and when the downlink assignment is received, received transport blocks are successfully decoded and the condition is satisfied, the terminal equipment determines that the random access procedure corresponding to the random access preamble is successfully completed.

In this embodiment, the condition of the first cell related to the random access preamble is that the first cell is identical to a second cell, or the first cell is different from a second cell. Reference may be to Embodiment 1 of specific meanings of the first cell. And the second cell is a cell for monitoring the downlink assignment for response to the random access preamble, or a special cell (SpCell), which is similar to that in Embodiment 2.

In one implementation, the downlink control channel is a downlink control channel of the second cell. In step 502, when the MAC entity of the terminal equipment receives the downlink assignment on the downlink control channel, the received corresponding transport blocks are successfully decoded and the first cell and the second cell are identical, it determines (or considers) that the random access procedure corresponding to the random access preamble is successfully completed. In a scenario where the first cell and the second cell are identical, as the downlink assignment and corresponding transport blocks of the first cell and/or the second cell are successfully received, it may be inferred that the network device and the terminal equipment may communicate normally, there is no need to continue with the random access procedure, and hence, it may be determined that the random access procedure corresponding to the random access preamble in step 501 is successfully completed.

In this implementation, optionally, the transport blocks may be transport blocks received on the first cell and/or the second cell; however, this embodiment is not limited thereto.

In one implementation, the downlink control channel is downlink control channel for response to the random access preamble in step 501. For example, the downlink control channel is downlink control channel for response to a beam failure recovery request. In step 502, when the MAC entity of the terminal equipment receives the downlink assignment on the downlink control channel, the received corresponding transport blocks are successfully decoded and the first cell and the second cell are identical, it determines (or considers) that the random access procedure corresponding to the random access preamble (such as a beam failure recovery request) is successfully completed. In the scenario where the first cell and the second cell are identical, as the downlink assignment for response to the random access preamble and the corresponding transport blocks are successfully received, it may be inferred that the network device and the terminal equipment may communicate normally, there is no need to continue with the random access procedure, and hence, it may be determined that the random access procedure corresponding to the random access preamble in step 501 is successfully completed.

In this embodiment, optionally, the transport blocks may be transport blocks received on the first cell and/or the second cell; however, this embodiment is not limited thereto.

In this embodiment, the above two implementations may be executed separately or may be executed in a combined manner. For example, the downlink control channel is downlink control channel of the second cell for response to the random access preamble in step 501, and this embodiment is not limited thereto.

In one implementation, the downlink control channel is a downlink control channel of the second cell. In step 502, when the MAC entity of the terminal equipment receives the downlink assignment on the downlink control channel, the received corresponding transport blocks are successfully decoded and the first cell and the second cell are different, it determines (or considers) that the random access procedure corresponding to the random access preamble is successfully completed. In a scenario where the first cell and the second cell are different, as the downlink assignment and corresponding transport blocks of the second cell are successfully received, it may be inferred that the network device and the terminal equipment may communicate normally, there is no need to continue with the random access procedure, and hence, it may be determined that the random access procedure corresponding to the random access preamble in step 501 is successfully completed.

**In** this embodiment, optionally, the transport blocks may be transport blocks received on the first cell; however, this embodiment is not limited thereto.

**In** one implementation, the downlink control channel is downlink control channel for response to the random access preamble in step 501. For example, the downlink control channel is downlink control channel for response to a beam failure recovery request. **In** step 502, when the MAC entity of the terminal equipment receives the downlink assignment on the downlink control channel, the received corresponding transport blocks are successfully decoded and the first cell and the second cell are different, it determines (or considers) that the random access procedure corresponding to the random access preamble (such as a beam failure recovery request) is successfully completed. **In** the scenario where the first cell and the second cell are different, as the downlink assignment for response to the random access preamble (transmitted in the first cell) and the corresponding transport blocks are successfully received, it may be inferred that the network device and the terminal equipment may communicate normally, there is no need to continue with the random access procedure, and hence, it may be determined that the random access procedure corresponding to the random access preamble in step 501 is successfully completed.

**In** this embodiment, optionally, the transport blocks may be transport blocks received on the first cell, and this embodiment is not limited thereto.

**In** this embodiment, the above two implementations may be executed separately or may be executed in a combined manner. For example, the downlink control channel is downlink control channel of the second cell for response to the random access preamble in step 501, and this embodiment is not limited thereto.

In this embodiment, the downlink control channel is addressed to a cell radio network temporary identifier (C-RNTI) or a random access radio network temporary identifier (RA-RNTI). Reference may be made to Embodiment 3 for specific implementations thereof, which shall not be described herein any further.

In this embodiment, after step 502, as the random access procedure is successfully completed, the method further includes (not shown in the figures): the terminal equipment stops transmitting or receiving uplink/downlink signals related to the random access procedure. Reference may be made to Embodiment 1 for a specific implementation thereof, which shall not be described herein any further.

In this embodiment, the scenario of the random access procedure may further be determined according to the condition, i.e. the scenario where the cell for initiation of a random access procedure corresponding to the random access preamble (or the cell where the random access preamble is transmitted) is identical to or different from the cell for monitoring downlink assignment for response to the random access preamble (or a special cell), and whether a random access procedure is successful is determined according to a relationship between the downlink control channel and a cell or a random access preamble transmitted by the terminal equipment. Hence, the terminal equipment may be able to accurately receive and transmit data, thereby improving a rate of success, reducing times of retransmission, and saving energy consumption.

It should be noted that above embodiments 1-4 may be implemented separately or implemented by combining any two or more thereof. That is, in determining whether the random access procedure is successfully completed, any two or more of steps 202, 302, 402 and 502 in the embodiments 1-4 may be combined for determination, and when a requirement of at least one of the steps are met, it is determined that the random access procedure is successfully completed, which shall not be enumerated herein any further.

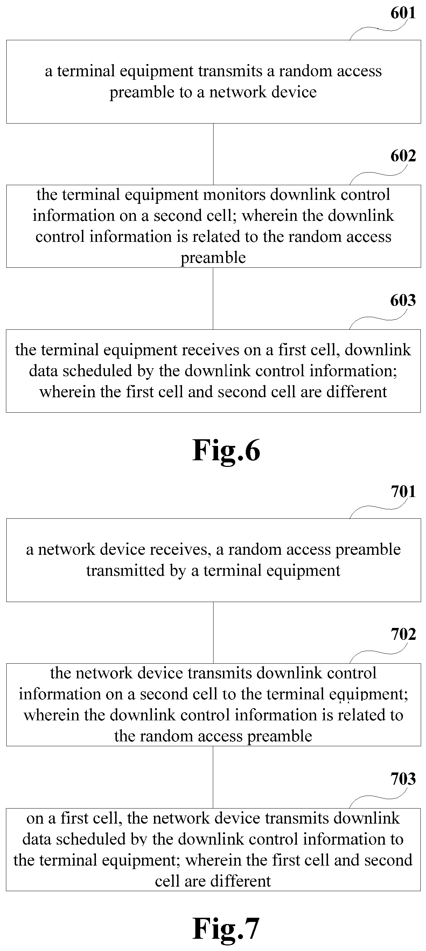

Steps 202, 302, 402 and 502 in above embodiments 1-4 illustrate behaviors of the MAC entity of the terminal equipment in the above different scenarios, that is, how to determine whether the random access procedure is successfully completed. Behaviors of the physical layer of the terminal equipment in the scenario shown in FIG. 1C shall be described in Embodiment 5 below with reference to FIG. 6.

### Embodiment 5

FIG. 6 is a flowchart of a data reception method of Embodiment 5, which is applicable to a terminal equipment side. As shown in FIG. 6, the method includes:
step 601: a terminal equipment transmits a random access preamble to a network device;
step 602: the terminal equipment monitors downlink control information on a second cell; wherein the downlink control information is related to the random access preamble; and
step 603: the terminal equipment receives on a first cell, downlink data scheduled by the downlink control information; wherein the first cell and second cell are different.

In this embodiment, reference may be made to step 201 in Embodiment 1 for the implementation of step 601, which shall not be described herein any further. For example, the terminal equipment may transmit the random access preamble on the first cell. That is, the first cell is a cell where the random access preamble is transmitted. However, this embodiment is not limited thereto, and the first cell may also be a cell that provides a reference signal index associated with the downlink control information, and/or a cell where beam failure recovery configuration to which the random access preamble corresponds is transmitted.

For example, the first cell is a cell where the random access preamble is transmitted, and when the random access preamble is a beam failure recovery request, before step 601, the method may further include (not shown in the figures): the terminal equipment receives first configuration transmitted by the network device via higher-layer signaling, the first configuration (such as PRACH-ResourceDedicatedBFR) indicating a specific PRACH resource for beam failure recovery. The first configuration may include at least one of the following configuration information: root sequence information configured for beam failure recovery, random access opportunity configuration information based on non-contention-based beam failure recovery, search space information for receiving beam failure recovery, candidate beam reference signal list information, and a priority of a parameter used to distinguish a random access procedures (for example, the random access procedure may be a random access procedure for beam failure recovery), and the terminal equipment transmits the random access preamble on the first cell according to the first configuration.

For example, the first cell may be a cell that provides a reference signal index associated with downlink data scheduled by the downlink control information; wherein the reference signal index is associated with the downlink data, indicating that the downlink data are received according to a quasi co-location (QCL) parameter associated with a reference signal to which the reference signal index corresponds. The method may further include (not shown in the figures): the terminal equipment receives on the first cell the reference signal index transmitted by the network device via higher layer signaling, the reference signal index being an index selected by the network device in a candidate beam reference signal list (candidateBeamRSlist). The reference signal may include at least one of the following: a channel state information reference signal (CSI-RS), a synchronization signal (SS), and a physical broadcast channel (PBCH).

For example, the first cell may be a cell where the beam failure recovery configuration to which the random access preamble corresponds is transmitted, that is, when the random access preamble is a beam failure recovery request, before step 601, the method may further include (not shown in the figures): the terminal equipment receives on the first cell the first configuration (beam failure recovery configuration) transmitted by the network device via high-layer signaling. Details of the first configuration are as described above, which shall not be described herein any further.

In this embodiment, the cell where the random access preamble is transmitted may be equivalent to the cell providing the reference signal index, or it may also be equivalent to the cell where the beam failure recovery configuration to which the random access preamble corresponds is transmitted, and this embodiment is not limited thereto.

In this embodiment, in step 602, the downlink control information is related to the random access preamble in step 601, indicating a random access response (such as a BFR RAR). For example, the downlink control information (DCI) is carried by a downlink control channel for scheduling downlink data. Reference may be made to existing techniques for a specific implementation of the DCI. The downlink control channel is a downlink control channel for response to the random access preamble, i.e. a PDCCH to which PRACH transmission corresponds. Reference may be made to Embodiment 3 or 4 for a specific implementation of the downlink control channel, which shall not be described herein any further.

In this embodiment, before step 602, the method may further include (not shown in the figures): the terminal equipment receives second configuration transmitted by the network device via high-layer signaling, the second configuration indicating a search space of random access response (BFR RAR, i.e. a beam failure recovery request response) of a beam failure recovery request. And the monitoring the downlink control information includes: the terminal equipment receives the downlink control channel (scrambled by a C-RNTI) in the search space according to the second configuration, and obtaining the downlink control information after descrambling the downlink control channel.

In this implementation, the second cell is a cell for monitoring the downlink control information, or the second cell is an Spcell.

In this embodiment, when the first cell and the second cell are different, in step 603, the terminal equipment assumes that the downlink data scheduled by the downlink control information is received on the first cell; wherein the receiving includes at least one of detecting, monitoring, and decoding.

In this embodiment, the above high-layer signaling may be media access control (MAC) layer signaling or radio resource control (RRC) signaling.

Hence, when the terminal equipment receives the downlink data on the first cell, it may infer that signal quality of the first cell is getting better, and determine that the beam failure of the first cell is recovered, thereby punctually terminating the corresponding random procedure, and saving energy consumption.

### Embodiment 6

FIG. 7 is a flowchart of a data transmission method of Embodiment 6, which is applicable to a network device side. As shown in FIG. 7, the method includes:
step 701: a network device receives, a random access preamble transmitted by a terminal equipment;
step 702: the network device transmits downlink control information on a second cell to the terminal equipment; wherein the downlink control information is related to the random access preamble; and
step 703: on a first cell, the network device transmits downlink data scheduled by the downlink control information to the terminal equipment; wherein the first cell and second cell are different.

**In** this embodiment, steps 701-703 correspond to steps 601-603 in Embodiment 5, and repeated parts shall not be described herein any further.

For example, the first cell is the cell where the random access preamble is transmitted, and when the random access preamble is a beam failure recovery request, before step 701, the method may further include (not shown in the figures): the network device transmits first configuration to the terminal equipment via higher-layer signaling. Reference may be made to Embodiment 5 for a specific implementation of the first configuration, which shall not be described herein any further.

For example, the first cell may be a cell that provides a reference signal index associated with the downlink data scheduled by the downlink control information, the reference signal being a candidate beam reference signal, and the method may further include (not shown in the figures): the network device selects a reference signal index from a candidate beam reference signal list (candidateBeamRSlist), and transmits the reference signal index to the terminal equipment via higher-layer signaling on the first cell.

For example, the first cell may be a cell where beam failure recovery configuration to which the random access preamble corresponds is transmitted, that is, when the random access preamble is a beam failure recovery request, before step 701, the method may further include (not shown in the figures): the network device transmits first configuration (beam failure recovery configuration) to the terminal equipment via higher-layer signaling on the first cell, the first configuration being as described above, which shall not be repeated herein any further.

In this embodiment, the above higher-layer signaling may be media access control (MAC) layer signaling or radio resource control (RRC) signaling.

In this embodiment, in step 702, the network device scrambles a PDCCH with a C-RNTI, the PDCCH being PDCCH for response to the random access preamble. DCI is carried by the PDCCH, and the DCI is transmitted to the terminal equipment on the second cell.

In this implementation, the second cell is a cell where the downlink control information is transmitted, or the second cell is an Spcell.

In this embodiment, in step 703, when the first cell and the second cell are different, the network device transmits the downlink data scheduled by the downlink control information to the terminal equipment on the first cell, so that the terminal equipment receives the downlink data scheduled by the downlink control information on the first cell, but does not receive the downlink data scheduled by the downlink control information on the second cell.

In this embodiment, in step 703, the network device transmits the downlink data according to the reference signal to which the random access preamble received in step 701 corresponds; wherein the method may further include (not shown in the figures): the network device configures a correspondence between an RACH occasion of the random access preamble and the reference signal via higher-layer signaling, the higher-layer signaling being RRC signaling, and according to the correspondence and the random access preamble, the reference signal to which the random access preamble corresponds may be determined. An antenna port used by the network device for transmitting the downlink data and an antenna port used for transmitting the reference signal are quasi-co-located. The reference signal may include at least one of the following: a channel state information reference signal (CSI-RS), a synchronization signal (SS), and physical broadcast channel (PBCH), etc.

Hence, the network device may use correct indication information to transmit the downlink data, thereby improving a rate of success of data transmission, reducing times of retransmission, and saving energy consumption.

### Embodiment 7

Embodiment 7 provides a random access apparatus. As a principle of the apparatus for solving problems is similar to that of the method in Embodiment 1 or 2, reference may be made to the implementation of the method in Embodiment 1 or 2 for implementation of this apparatus, with identical contents being going to be described herein any further.

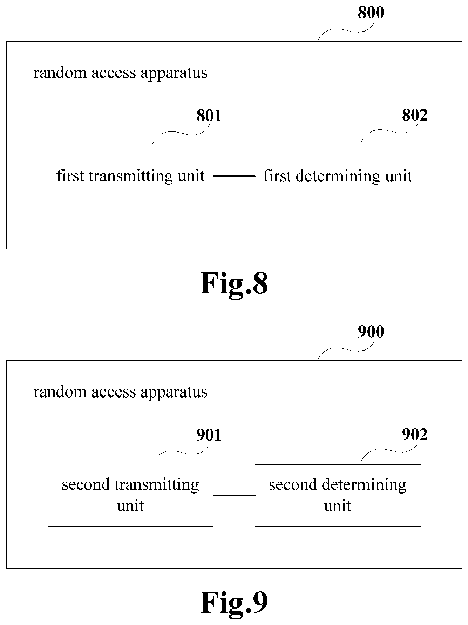

FIG. 8 is a schematic diagram of a structure of the random access apparatus. As shown in FIG. 8, a random access apparatus 800 includes:
a first transmitting unit 801 configured to transmit a random access preamble to a network device; and
a first determining unit 802 configured to determine (consider) that a random access procedure corresponding to the random access preamble is successfully completed when a terminal equipment receives a first notification or when a terminal equipment receives a first notification and a condition of a first cell related to the random access preamble is satisfied;
wherein the first notification is a notification of reception of a downlink control channel transmission and is received from a lower layer of the terminal equipment on the first cell, and/or a notification of reception of a downlink control channel transmission for response to the random access preamble and is received from the lower layer.

In this embodiment, reference may be made to steps 201-202 in Embodiment 1 and steps 301-302 in Embodiment 2 for implementations of the first transmitting unit 801 and the first determining unit 802, which shall not be described herein any further.

In this embodiment, the condition is that: the first cell is identical to a second cell, or the first cell is different from a second cell. Reference may be made to Embodiment 1 or Embodiment 2 for implementations of the first cell and the second cell, which shall not be described herein any further.

In this embodiment, the random access preamble is a beam failure recovery request, and the downlink control channel transmission is address to a C-RNTI or an RA-RNTI.

In this embodiment, optionally, the apparatus further includes (not shown in the figures):
a first transceiving unit configured to receive downlink control channel transmission, and transmit a first notification of reception of the downlink control channel transmission to an MAC entity of the terminal equipment. The MAC entity of the terminal equipment receives the first notification transmitted from a lower layer. Reference may be made to Embodiment 1 for a specific implementation of the downlink control channel transmission, which shall not be described herein any further.

In this embodiment, optionally, the apparatus further includes (not shown in the figures):
a first processing unit configured to, when the random access procedure is successfully completed, stop transmitting or receiving uplink/downlink signals related to the random access procedure, and/or ignore possible occurrence of a measurement gap.

With the above embodiment, whether a random access procedure is successful is determined according to a relationship between the downlink control channel transmission and a cell or a random access preamble transmitted by the terminal equipment. Hence, the terminal equipment may be able to accurately receive and transmit data, thereby improving a rate of success, reducing times of retransmission, and saving energy consumption.

### Embodiment 8

Embodiment 8 provides a random access apparatus. As a principle of the apparatus for solving problems is similar to that of the method in Embodiment 3 or 4, reference may be made to the implementation of the method in Embodiment 3 or 4 for implementation of this apparatus, with identical contents being going to be described herein any further.

FIG. 9 is a schematic diagram of a structure of the random access apparatus. As shown in FIG. 9, a random access apparatus 900 includes:
a second transmitting unit 901 configured to transmit a random access preamble to a network device; and
a second determining unit 902 configured to determine that a random access procedure corresponding to the random access preamble is successfully completed when a terminal equipment has received downlink assignment on a downlink control channel and received corresponding transport blocks are successfully decoded, or when a terminal equipment has received a downlink assignment on a downlink control channel, received corresponding transport blocks are successfully decoded and a condition of a first cell related to the random access preamble is satisfied;
wherein the downlink control channel is a downlink control channel of a second cell and/or a downlink control channel for response to the random access preamble.

In this embodiment, reference may be made to steps 401-402 in Embodiment 3 and steps 501-502 in Embodiment 4 for implementations of the second transmitting unit 901 and the second determining unit 902, which shall not be described herein any further.

In this embodiment, the condition is that: the first cell is identical to a second cell, or the first cell is different from a second cell. Reference may be made to Embodiment 1 or Embodiment 2 for implementations of the first cell and the second cell, which shall not be described herein any further.

In this embodiment, the transport blocks are transport blocks received on the first cell, the random access preamble is a beam failure recovery request, and the downlink control channel is address to a C-RNTI or an RA-RNTI.

In this embodiment, optionally, the apparatus further includes (not shown in the figures):
a second transceiving unit configured to monitor downlink assignment on the downlink control channel, receive transport blocks on the PDSCH scheduled by the PDCCH (transport blocks are taken as basic transmission units of the data on the PDSCH) when the downlink assignment is received on the PDCCH, and decode the received transport blocks. Reference may be made to Embodiment 3 for a specific implementation of the downlink control channel, which shall not be described herein any further.

**In** this embodiment, optionally, the apparatus further includes (not shown in the figures):
a second processing unit configured to, when the random access procedure is successfully completed, stop transmitting or receiving uplink/downlink signals related to the random access procedure, and/or ignore a possible occurrence of a measurement gap.

With the above embodiment, whether a random access procedure is successful is determined according to a relationship between the downlink control channel and a cell or a random access preamble transmitted by the terminal equipment. Hence, the terminal equipment may be able to accurately receive and transmit data, thereby improving a rate of success, reducing times of retransmission, and saving energy consumption.

### Embodiment 9

Embodiment 9 provides a data reception apparatus. As a principle of the apparatus for solving problems is similar to that of the method in Embodiment 5, reference may be made to the implementation of the method in Embodiment 5 for implementation of this apparatus, with identical contents being going to be described herein any further.

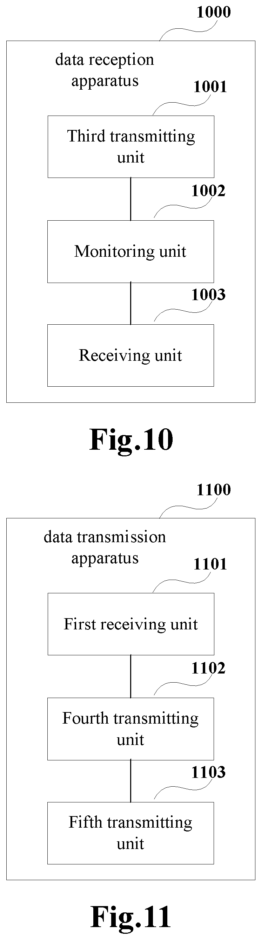

FIG. 10 is a schematic diagram of a structure of the data reception apparatus. As shown in FIG. 10, a data reception apparatus 1000 includes:
a third transmitting unit 1001 configured to transmit a random access preamble to a network device;
a monitoring unit 1002 configured to monitor downlink control information on a second cell; wherein the downlink control information is related to the random access preamble; and
a receiving unit 1003 configured to, on a first cell, receive downlink data scheduled by the downlink control information; wherein the first cell and second cell are different.

In this embodiment, reference may be made to Embodiment 5 for implementations of the first cell and the second cell, which shall not be described herein any further.

In this embodiment, reference may be made to steps 601-603 in Embodiment 5 for implementations of the third transmitting unit 1001, the monitoring unit 1002 and the receiving unit 1003.

In this embodiment, the random access preamble is configured and transmitted according to higher layer signaling used for beam failure recovery, and the random access preamble is a beam failure recovery request.

In this embodiment, optionally, the apparatus further includes: (not shown in the figures) a third transceiving unit configured to receive first configuration transmitted by the network device via higher-layer signaling, the first configuration (such as PRACH-ResourceDedicatedBFR) indicating a specific PRACH resource used for beam failure recovery; reference may be made to existing standards for details of the first configuration, and the third transmitting unit 1001 transmits the random access preamble on the first cell according to the first configuration; or
a third transceiving unit configured to receive, on the first cell, a reference signal index transmitted by the network device via higher-layer signaling, the reference signal index being an index selected by the network device from a candidate beam reference signal list (candidateBeamRSlist); or
a third transceiving unit configured to receive, on the first cell, first configuration (beam failure recovery configuration) transmitted by the network device via higher-layer signaling, the first configuration being as described above, and being not going to be described herein any further.

Hence, when the terminal equipment receives the downlink data on the first cell, it may infer that signal quality of the first cell is getting better, and determine that the beam failure of the first cell is recovered, thereby punctually terminating the corresponding random procedure, and saving energy consumption.

### Embodiment 10

Embodiment 10 provides a data transmission apparatus. As a principle of the apparatus for solving problems is similar to that of the method in Embodiment 6, reference may be made to the implementation of the method in Embodiment 6 for implementation of this apparatus, with identical contents being going to be described herein any further.

FIG. 11 is a schematic diagram of a structure of the data transmission apparatus. As shown in FIG. 11, a data transmission apparatus 1100 includes:
a first receiving unit 1101 configured to receive a random access preamble transmitted by a terminal equipment;
a fourth transmitting unit 1102 configured to transmit downlink control information on a second cell to the terminal equipment; wherein the downlink control information is related to the random access preamble; and
a fifth transmitting unit 1103 configured to, on a first cell, transmit downlink data scheduled by the downlink control information by the network device to the terminal equipment; wherein the first cell and second cell are different.

In this embodiment, reference may be made to Embodiment 5 for implementations of the first cell and the second cell, which shall not be described herein any further.

In this embodiment, reference may be made to steps 701-703 in Embodiment 6 for implementations of the first receiving unit 1101, the fourth transmitting unit 1102 and fifth transmitting unit 1103.

In this embodiment, the random access preamble is configured and transmitted according to higher layer signaling used for beam failure recovery, and the random access preamble is a beam failure recovery request.

In this embodiment, optionally, the apparatus further includes (not shown in the figures):
a fourth transceiving unit configured to transmit first configuration to the terminal equipment via higher-layer signaling, the first configuration (such as PRACH-ResourceDedicatedBFR) indicating a specific PRACH resource used for beam failure recovery; reference may be made to existing standards for details of the first configuration; or
a fourth transceiving unit configured to select a reference signal index from a candidate beam reference signal list (candidateBeamRSlist), and on the first cell, transmit the reference signal index to the terminal equipment via higher-layer signaling; or
a fourth transceiving unit configured to transmit first configuration (beam failure recovery configuration) to the terminal equipment on the first cell via higher-layer signaling, the first configuration being as described above, and being not going to be described herein any further.

Hence, the network device may use correct indication information to transmit the downlink data, thereby improving a rate of success of data transmission, reducing times of retransmission, and saving energy consumption.

### Embodiment 11

This embodiment provides a communication system, and reference may be made to FIG. 1A, with contents identical to those in embodiments 1-2 being not going to be described herein any further.

In this embodiment, the communication system 100 may include: a terminal equipment 102 configured with the random access apparatus 800 or 900 as described in Embodiment 7 or 8, or configured with the data reception apparatus 1000 as described in Embodiment 9.

Optionally, the communication system may further include: a network device 101 configured with the data transmission apparatus 1100 as described in Embodiment 10.

This embodiment further provides a network device, which may be, for example, a base station. However, this disclosure is not limited thereto, and it may also be another network device.

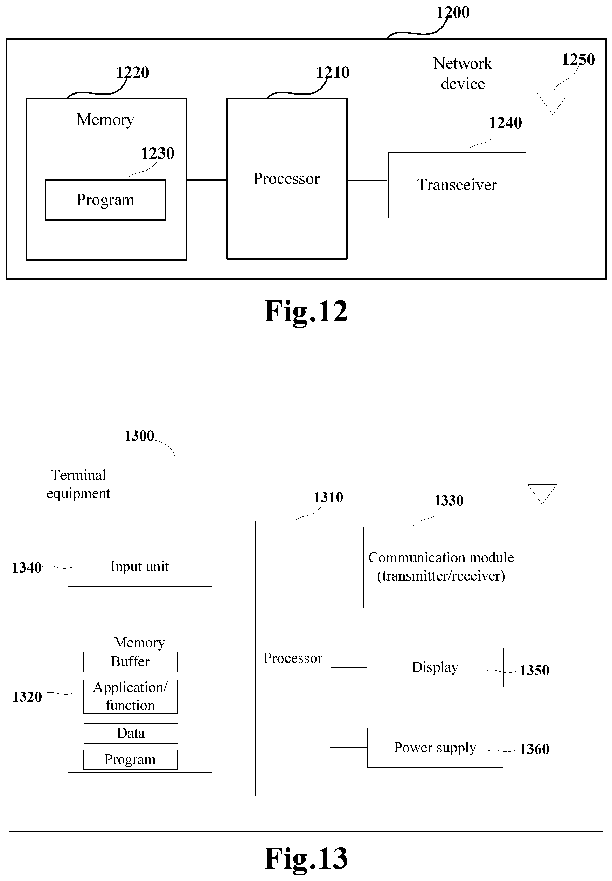

FIG. 12 is a schematic diagram of a structure of the network device of the embodiment of this disclosure. As shown in FIG. 12, a network device 1200 may include a processor 1210 (such as a central processing unit (CPU)) and a memory 1220, the memory 1220 being coupled to the processor 1210. The memory 1220 may store various data, and furthermore, it may store a program 1230 for data processing, and execute the program 1230 under control of the processor 1210.

For example, the processor 1210 may be configured to execute the program 1230 to carry out the data transmission method described in Embodiment 6. For example, the processor 1210 may be configured to execute the following control: receive a random access preamble transmitted by a terminal equipment; transmit downlink control information on a second cell to the terminal equipment; wherein the downlink control information is related to the random access preamble; and on a first cell, transmit downlink data scheduled by the downlink control information to the terminal equipment; wherein the first cell and second cell are different.

Furthermore, as shown in FIG. 12, the network device 1200 may include a transceiver 1240, and an antenna 1250, etc. Functions of the above components are similar to those in the related art, and shall not be described herein any further. It should be noted that the network device 1200 does not necessarily include all the parts shown in FIG. 12, and furthermore, the network device 1200 may include parts not shown in FIG. 12, and the related art may be referred to.

The embodiment of this disclosure further provides a terminal equipment, however, this disclosure is not limited thereto, and it may also be another equipment.

FIG. 13 is a schematic diagram of the terminal equipment of the embodiment of this disclosure. As shown in FIG. 13, a terminal equipment 1300 may include a processor 1310 and a memory 1320, the memory 1320 storing data and a program and being coupled to the processor 1310. It should be noted that his figure is illustrative only, and other types of structures may also be used, so as to supplement or replace this structure and achieve a telecommunications function or other functions.

For example, the processor 1310 may be configured to execute a program to carry out the random access method described in Embodiment 1 or 2. For example, the processor 1310 may be configured to execute the following control: transmit a random access preamble to a network device; and determine (consider) that a random access procedure corresponding to the random access preamble is successfully completed when the terminal equipment receives a first notification or when the terminal equipment receives a first notification and a condition of a first cell related to the random access preamble is satisfied; wherein the first notification is a notification of reception of a downlink control channel transmission and is received from a lower layer of the terminal equipment on the first cell, and/or a notification of reception of a downlink control channel transmission for response to the random access preamble and is received from the lower layer.

For example, the processor 1310 may be configured to execute the program to carry out the random access method described in Embodiment 3 or 4. For example, the processor 1310 may be configured to execute the following control: transmit a random access preamble to a network device; and determine that a random access procedure corresponding to the random access preamble is successfully completed when downlink assignment is received on a downlink control channel and received corresponding transport blocks are successfully decoded, or when downlink assignment is received on a downlink control channel, received corresponding transport blocks are successfully decoded and a condition of a first cell related to the random access preamble is satisfied; wherein the downlink control channel is a downlink control channel of a second cell and/or a downlink control channel for response to the random access preamble.

For example, the processor 1310 may be configured to execute the program to carry out the data reception method described in Embodiment 5. For example, the processor 1310 may be configured to execute the following control: transmit a random access preamble to a network device; monitor downlink control information on a second cell; wherein the downlink control information is related to the random access preamble; and receive on a first cell, downlink data scheduled by the downlink control information; wherein the first cell and second cell are different.

As shown in FIG. 13, the terminal equipment 1300 may further include a communication module 1330, an input unit 1340, a display 1350, and a power supply 1360; wherein functions of the above components are similar to those in the related art, which shall not be described herein any further. It should be noted that the terminal equipment 1300 does not necessarily include all the parts shown in FIG. 13, and the above components are not necessary. Furthermore, the terminal equipment 1300 may include parts not shown in FIG. 13, and the related art may be referred to.

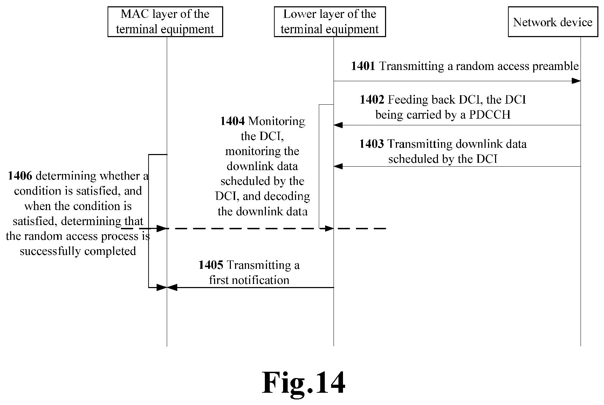

FIG. 14 is a flowchart of the data reception and transmission method of this embodiment. As shown in FIG. 14, the method includes:
step 1401: a terminal equipment transmits a random access preamble to a network device;
step 1402: the network device transmits downlink control information on a second cell, the downlink control information being carried by a PDCCH, the PDCCH being PDCCH for response to the random access preamble;
step 1403: the network device transmits downlink data scheduled by the downlink control information on the first cell;
step 1404: the terminal equipment monitors the downlink control information on the second cell, monitors the downlink data on the first cell, and decodes the downlink data.

Reference may be made to embodiment 5-6 for implementations of steps 1401-1404, and steps 1401 and 1404 are implemented by a lower layer (such as a physical layer) of the terminal equipment, which shall not be described herein any further. In addition, an order of execution of steps 1402-1404 is not limited in this embodiment, and they may be executed simultaneously.

Step 1405: the lower layer of the terminal equipment transmits a first notification to an MAC layer when the lower layer receives downlink control channel transmission, reference being able to be made to Embodiment 1 for details of the first notification, which shall not be described herein any further.

In this embodiment, an order of execution of steps 1405 and 1404 is not limited. Step 1405 may be executed simultaneously with step 1404; for example, step 1405 may be executed after the data decoding in step 1404 is successful, or it may be executed after the DCI is received and before the data decoding, and this embodiment is not limited thereto.

Step 1406: the MAC entity determines whether a condition is satisfied, and when the condition is satisfied, determines that the random access process corresponding to the random access preamble in step 1401 is successfully completed.

Reference may be made to steps 202, 302, 402 and 502 in embodiments 1-4 for implementation of step 1406, which is executed by the MAC layer of the terminal device, and shall not be described herein any further.

In this embodiment, before step 1401, the method may further include (not shown in the figures, optional): the network device transmits a reference signal index and/or first configuration to the terminal equipment. Reference may be made to Embodiment 5 for details, which shall not be described herein any further.

An embodiment of this disclosure provides a computer storage medium, including a computer readable program code, which will cause a random access apparatus or a terminal equipment to carry out the random access method described in any one of embodiments 1-4.

An embodiment of the present disclosure provides a computer readable program code, which, when executed in a random access apparatus or a terminal equipment, will cause the random access apparatus or the terminal equipment to carry out the random access method described in any one of embodiments 1-4.

An embodiment of this disclosure provides a computer storage medium, including a computer readable program code, which will cause a data reception apparatus or a terminal equipment to carry out the data reception method described in Embodiment 5.

An embodiment of the present disclosure provides a computer readable program code, which, when executed in a data reception apparatus or a terminal equipment, will cause the data reception apparatus or the terminal equipment to carry out the data reception method described in Embodiment 5.

An embodiment of this disclosure provides a computer storage medium, including a computer readable program code, which will cause a data transmission apparatus or a network device to carry out the data transmission method described in Embodiment 6.

An embodiment of the present disclosure provides a computer readable program code, which, when executed in a data transmission apparatus or a network device, will cause the data transmission apparatus or the network device to carry out the data transmission method described in Embodiment 6.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIGs. 8-13 may either correspond to software modules of procedures of a computer program, or correspond to hardware modules. Such software modules may respectively correspond to the steps shown in FIGs. 2-7. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIGs. 8-13 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIGs. 8-13 may also be realized as a combination of computing equipment, such as a combination of a DSP and a microprocessor, multiple processors, one or more microprocessors in communication combination with a DSP, or any other such configuration.

## Claims

1. A random access apparatus (800), comprising:
a first transmitting unit (801) configured to transmit a random access preamble for beam failure recovery request to a network device (101); and
a first determining unit (802) configured to consider that a random access procedure corresponding to the random access preamble is successfully completed when a terminal equipment (102) receives a first notification
wherein the first notification is a notification of reception of a downlink control channel transmission and is received from a lower layer of the terminal equipment (102) on a first cell,
wherein the first cell is a serving cell where the random access preamble is transmitted.

2. The apparatus according to claim 1, wherein the first determining unit (802) is configured to consider that the random access procedure corresponding to the random access preamble is successfully completed when the terminal equipment (102) receives the first notification and a condition of the first cell related to the random access preamble is satisfied.

3. The apparatus according to claim 1, wherein the first notification is a notification of reception of a downlink control channel transmission for response to the random access preamble.

4. The apparatus according to claim 2, wherein the condition is that: the first cell is identical to a second cell, or the first cell is different from a second cell.

5. The apparatus according to claim 4, wherein the second cell is:
a cell for monitoring downlink control channel transmission for response to the random access preamble; or
a special cell, SpCell.

6. The apparatus according to claim 1, wherein the downlink control channel transmission is addressed to a cell radio network temporary identifier, C-RNTI, or a random access radio network temporary identifier, RA-RNTI.

7. The apparatus according to claim 1, wherein the apparatus further comprises:
a first processing unit configured to, when the random access procedure is successfully completed, stop transmitting or receiving uplink/downlink signals related to the random access procedure, and/or ignore possible occurrence of a measurement gap.

## Patentansprüche

1. Direktzugriffsvorrichtung (800), umfassend:
eine erste Übertragungseinheit (801), die konfiguriert ist, um eine Direktzugriffspräambel für eine Strahlfehlerwiederherstellungsanforderung an eine Netzwerkvorrichtung (101) zu übertragen; und
eine erste Bestimmungseinheit (802), die konfiguriert ist, um zu berücksichtigen, dass ein Direktzugriffsverfahren, das der Direktzugriffspräambel entspricht, erfolgreich abgeschlossen ist, wenn eine Endausrüstung (102) eine erste Benachrichtigung empfängt
wobei die erste Benachrichtigung eine Benachrichtigung über den Empfang einer Downlink-Steuerkanalübertragung ist und von einer unteren Schicht der Endausrüstung (102) in einer ersten Zelle empfangen wird,
wobei die erste Zelle eine Bedienzelle ist, in der die Direktzugriffspräambel übertragen wird.

2. Vorrichtung nach Anspruch 1, wobei die erste Bestimmungseinheit (802) konfiguriert ist, um zu berücksichtigen, dass das Direktzugriffsverfahren, das der Direktzugriffspräambel entspricht, erfolgreich abgeschlossen ist, wenn die Endausrüstung (102) die erste Benachrichtigung empfängt und ein Zustand der ersten Zelle, der die Direktzugriffspräambel betrifft, erfüllt ist.

3. Vorrichtung nach Anspruch 1, wobei die erste Benachrichtigung eine Benachrichtigung über den Empfang einer Downlink-Steuerkanalübertragung als Antwort auf die Direktzugriffspräambel ist.

4. Vorrichtung nach Anspruch 2, wobei die Bedingung dafür lautet: Die erste Zelle ist identisch mit einer zweiten Zelle oder die erste Zelle unterscheidet sich von einer zweiten Zelle.

5. Vorrichtung nach Anspruch 4, wobei die zweite Zelle:
eine Zelle ist, die als Reaktion auf die Direktzugriffspräambel die Downlink-Steuerkanalübertragung überwacht; oder
eine spezielle Zelle, SpCell, ist.

6. Vorrichtung nach Anspruch 1, wobei die Downlink-Steuerkanalübertragung an einen temporären Identifikator eines Zellfunknetzes (Cell Radio Network Temporary Identifier), C-RNTI, oder einen temporären Identifikator eines Funknetzes mit Direktzugriff (Random Access Radio Network Temporary Identifier), RA-RNTI, adressiert ist.

7. Vorrichtung nach Anspruch 1, wobei die Vorrichtung ferner Folgendes umfasst:
eine erste Verarbeitungseinheit, die konfiguriert ist, um nach erfolgreichem Abschluss des Direktzugriffsverfahrens die Übertragung oder den Empfang von Uplink-/Downlink-Signalen, die das Direktzugriffsverfahren betreffen, zu beenden und/oder das mögliche Auftreten einer Messlücke zu ignorieren.

## Revendications

1. Appareil d'accès aléatoire (800), comprenant :
une première unité de transmission (801) configurée pour transmettre un préambule d'accès aléatoire pour une requête de récupération de défaillance de faisceau à un dispositif réseau (101) ; et
une première unité de détermination (802) configurée pour considérer qu'une procédure d'accès aléatoire correspondant au préambule d'accès aléatoire est terminée avec succès lorsqu'un équipement terminal (102) reçoit une première notification
dans lequel la première notification est une notification de réception d'une transmission de canal de commande de liaison descendante et est reçue depuis une couche inférieure de l'équipement terminal (102) sur une première cellule,
dans lequel la première cellule est une cellule de service où le préambule d'accès aléatoire est transmis.

2. Appareil selon la revendication 1, dans lequel la première unité de détermination (802) est configurée pour considérer que la procédure d'accès aléatoire correspondant au préambule d'accès aléatoire est terminée avec succès lorsque l'équipement terminal (102) reçoit la première notification et qu'une condition de la première cellule liée au préambule d'accès aléatoire est remplie.

3. Appareil selon la revendication 1, dans lequel la première notification est une notification de réception d'une transmission de canal de commande de liaison descendante en réponse au préambule d'accès aléatoire.

4. Appareil selon la revendication 2, dans lequel la condition est que la première cellule est identique à une seconde cellule, ou que la première cellule est différente d'une seconde cellule.

5. Appareil selon la revendication 4, dans lequel la seconde cellule est :
une cellule de surveillance de la transmission de canal de commande de liaison descendante pour répondre au préambule d'accès aléatoire ; ou
une cellule spéciale, SpCell.

6. Appareil selon la revendication 1, dans lequel la transmission de canal de commande de liaison descendante est adressée à un identifiant temporaire de réseau radio cellulaire, C-RNTI, ou à un identifiant temporaire de réseau radio à accès aléatoire, RA-RNTI.

7. Appareil selon la revendication 1, dans lequel l'appareil comprend également :
une première unité de traitement configurée pour, lorsque la procédure d'accès aléatoire est terminée avec succès, cesser de transmettre ou de recevoir des signaux de liaison montante/descendante liés à la procédure d'accès aléatoire et/ou ignorer la survenue éventuelle d'un intervalle de mesure.
